# EUROPEAN PATENT SPECIFICATION

(11) **EP 3 470 283 B1**
(45) Date of publication and mention of the grant of the patent: **31.01.2024**
(21) Application number: 17812656.1
(22) Date of filing: 12.06.2017
(51) Int. Cl.: B60T 13/68, B60T 13/36, B60T 13/66, B60T 17/22

(54) **METHOD, DEVICE AND SYSTEM FOR CUTTING BOGIE BRAKE OFF**
VERFAHREN, VORRICHTUNG UND SYSTEM ZUM ABSCHALTEN EINER DREHGESTELLBREMSE
PROCÉDÉ, DISPOSITIF ET SYSTÈME POUR COUPER UN FREIN DE BOGIE

(30) Priority: 12.06.2016 CN 201610408709
(43) Date of publication of application: 17.04.2019
(73) Proprietor: CRRC Qingdao Sifang Co., Ltd., Qingdao City, Shandong 266111 (CN)
(72) Inventor: WANG, Xiangbo, Qingdao Shandong 266111 (CN); WANG, Xiaodong, Qingdao Shandong 266111 (CN); ZHANG, Hongping, Qingdao Shandong 266111 (CN); CUI, Hongguang, Qingdao Shandong 266111 (CN); WANG, Shoufeng, Qingdao Shandong 266111 (CN); LIANG, Jie, Qingdao Shandong 266111 (CN); JIANG, Xin, Qingdao Shandong 266111 (CN)
(74) Representative: Prinz & Partner mbB
(86) International application number: PCT/CN2017/087872
(87) International publication number: WO 2017/215545

(56) References cited:
- CN-A- 102 328 646
- CN-A- 104 442 902
- CN-A- 105 539 525
- CN-A- 106 043 262
- CN-U- 201 882 108
- US-A- 5 064 251
- US-A- 5 503 469

## Description

### Technical Field

The present invention relates to the field of vehicle control, in particular to a method, device and system for cutting a bogie brake off.

### Background

In the existing urban rail vehicle, a single bogie brake is cut off by setting a brake cutting-off valve with a contact under a passenger seat. The solution can cut the brake off conveniently in a manual drive mode, but cannot meet the requirements of an unmanned vehicle.

Aiming at the problem that the brake cutting-off valve is set under the passenger seat to cut the single bogie brake off in the existing urban rail vehicle, but the requirements of an unmanned vehicle cannot be met, an effective solution has not been presented.
Document CN105539525 A describes a vehicle-mounted controller remote fault resetting method suitable for full-automatic driving.

### Summary

According to the invention, a method according to claim 1, a device according to claim 8 and a system according to claim 12 is provided. The dependent claims relate to preferred embodiments.

The present invention provides a method, device and system for cutting a bogie brake off, so as to at least solve the technical problem that a brake cutting-off valve is set under a passenger seat to cut a single bogie brake off in the existing urban rail vehicle, but the requirements of an unmanned vehicle cannot be met.

According to a preferred embodiment of the invention, a method for cutting a bogie brake off is provided. The method includes that: when a bogie brake is not able to be relieved, a cutting-off signal output from an Operating Control Center (OCC) is received, wherein the cutting-off signal is used for triggering an action of cutting the bogie brake off; a logic operation is performed on the cutting-off signal to obtain an isolation control signal; and an electromagnetic valve corresponding to a bogie is controlled according to the isolation control signal to act, so as to cut the bogie brake off; wherein performing the logic operation on the cutting-off signal to obtain an isolation control signal comprises: parsing the received cutting-off signal to obtain fault data, wherein the fault data includes a label of a failed bogie and a fault type of the failed bogie; determining the label of the failed bogie and generating the isolation control signal when determining that the failed bogie is not able to be relieved during emergency braking.

According to another preferred embodiment of the invention, a device for cutting a bogie brake off is also provided. The device includes: a receiving component, which is configured to, when the bogie brake is not able to be relieved, receive a cutting-off signal output from the OCC, wherein the cutting-off signal is used for triggering an action of cutting the bogie brake off; a processing component, which is configured to perform a logic operation on the cutting-off signal to obtain an isolation control signal; and a controlling component, configured to control according to the isolation control signal an electromagnetic valve corresponding to a bogie to act, so as to cut the bogie brake off; wherein the processing component is further configured to parse the received cutting-off signal to obtain fault data, wherein the fault data includes a label of a failed bogie and a fault type of the failed bogie; to determine the label of the failed bogie and to generate the isolation control signal when determining that the failed bogie is not able to be relieved during emergency braking.

According to another preferred embodiment of the invention, a system for cutting a bogie brake off is also provided. The system includes: the OCC, which is configured to, when the bogie brake is not able to be relieved, output a cutting-off signal, wherein the cutting-off signal is used for triggering an action of cutting the bogie brake off; a Train Control and Management System (TCMS), which communicates with the OCC, and is configured to perform a logic operation on the received cutting-off signal to obtain an isolation control signal; and an electromagnetic valve, which is connected with the TCMS, the bogie and a main air reservoir of vehicle, and is configured to act according to the isolation control signal, so as to cut the bogie brake off; wherein the TCMS is further configured to parse the received cutting-off signal to obtain fault data, wherein the fault data includes a label of a failed bogie and a fault type of the failed bogie; to determine the label of the failed bogie and to generate the isolation control signal when determining that the failed bogie is not able to be relieved during emergency braking.

When the bogie brake is not able to be relieved, a cutting-off signal output from the OCC is received, a logic operation is performed on the cutting-off signal to obtain an isolation control signal, and an electromagnetic valve corresponding to a bogie is controlled according to the isolation control signal to act, so as to cut the bogie brake off; in such a manner, the purpose of unilaterally cutting off the bogie whose brake is not able to be relieved is achieved, and the technical effect of increasing efficiency in solving problems in a fault state is achieved, thereby the technical problem that the brake cutting-off valve is set under the passenger seat to cut the single bogie brake off in the existing urban rail vehicle, but the requirements of the unmanned vehicle cannot be met is solved.

### Brief Description of the Drawings

The invention will now be described with reference to the following drawings. In the accompanying drawings:
Fig. 1 is a flowchart of a method for cutting a bogie brake off according to a preferred embodiment of the invention;
Fig. 2 is a schematic diagram of an alternative system for cutting a bogie brake off according to the preferred embodiment of the invention;
Fig. 3 is a flowchart of an alternative method for cutting a bogie brake off according to the preferred embodiment of the invention;
Fig. 4 is a schematic diagram of a device for cutting a bogie brake off according to the preferred embodiment of the invention; and
Fig. 5 is a schematic diagram of a system for cutting a bogie brake off according to the preferred embodiment of the invention.

### Detailed Description of the Embodiments

In order to make those skilled in the art understand the solutions of the present invention better, the technical solutions in the embodiments of the present invention are clearly and completely elaborated below in combination with the accompanying drawings. It is apparent that the described embodiments are only a part of the embodiments of the present invention but not all. Based on the embodiments of the present invention, all the other embodiments obtained by those of ordinary skill in the art on the premise of not contributing creative effort should belong to the protection scope of the present invention.

It is to be noted that the terms like "first" and "second" in the specification, the claims and the accompanying drawings of the present invention are used for differentiating the similar objects, but do not have to describe a specific order or a sequence. It should be understood that the objects may be exchanged under appropriate circumstances, so that the embodiments of the present invention described here may be implemented in an order different from that described or shown here. Moreover, the terms like "include" and "have" and any variation of them are intended to cover nonexclusive including; for example, the process, method, system, product or device including a series of steps or units do not have to be limited to those clearly listed steps or units, but may include other steps or units which are not clearly listed or inherent in these process, method, system, product or device.

### Embodiment 1

An embodiment of a method for cutting a bogie brake off is provided. It is to be noted that these steps presented in the flowchart of the accompanying drawings can be executed in a computer system like a group of computer executable instructions, and moreover, although a logical sequence is shown in the flowchart, in some cases, the presented or described steps can be performed in a sequence different from that described here.

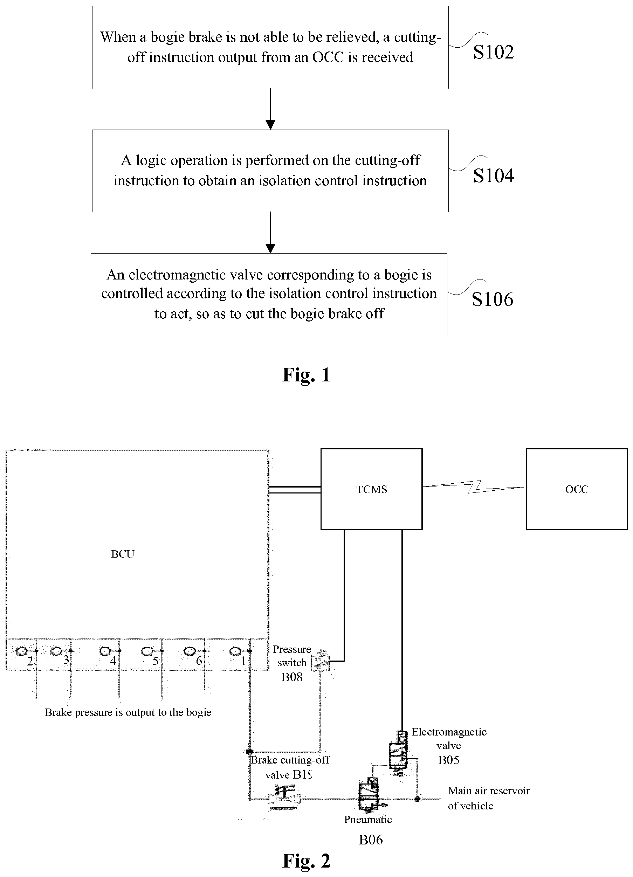

Fig. 1 is a flowchart of the method for cutting a bogie brake off according to the preferred embodiment of the invention. As shown in Fig. 1, the method includes the following steps.

At S102, when a bogie brake is not able to be relieved, a cutting-off signal output from an OCC is received, wherein the cutting-off signal is used for triggering an action of cutting the bogie brake off.

At S104, a logic operation is performed on the cutting-off signal to obtain an isolation control signal.

At S106, an electromagnetic valve corresponding to a bogie is controlled according to the isolation control signal to act, so as to cut the bogie brake off; wherein performing the logic operation on the cutting-off signal to obtain an isolation control signal comprises: parsing the received cutting-off signal to obtain fault data, wherein the fault data includes a label of a failed bogie and a fault type of the failed bogie; determining the label of the failed bogie and generating the isolation control signal when determining that the failed bogie is not able to be relieved during emergency braking.

The above electromagnetic valve may be a bogie isolation electromagnetic valve.

Fig. 2 is a schematic diagram of an alternative system for cutting a bogie brake off according to the preferred embodiment of the invention. As shown in Fig. 2, in an alternative solution, each bogie is equipped with the corresponding electromagnetic valve; when the bogie brake is not able to be relieved, including emergency braking, it is possible to output a bogie brake cutting-off signal through the OCC and output a bogie brake isolation control corresponding to the electromagnetic valve through TCMS software logic; and after the bogie is remotely cut off, the bogie loses an air braking force including emergency braking.

In an alternative embodiment, when the bogie brake is not able to be relieved, the TCMS sends a signal indicating that the bogie brake is not able to be relieved to the OCC; after receiving the signal, the OCC sends the cutting-off signal which is used for triggering the action of cutting the bogie brake off to the TCMS; the TCMS judges whether the cutting-off signal meets a preset condition of cutting the bogie brake off; when the cutting-off signal meets the preset condition, the TCMS generates the isolation control signal to control the electromagnetic valve corresponding to the bogie to act, and then cuts the bogie brake off; when the cutting-off signal does not meet the preset condition, the TCMS will not generate the isolation control signal, then the bogie brake cannot be relieved.

In another alternative embodiment, after receiving the cutting-off signal output from the OCC, the TCMS parses the received cutting-off signal to obtain fault data. The fault data includes a label of the failed bogie and a fault type of the bogie. After parsing the cutting-off signal to obtain the fault data, the TCMS analyzes the fault data, so as to determine the label of the failed bogie and determine whether the failed bogie is in a serious fault, for example, the brake is not able to be relieved; when the TCMS determines that the bogie is not able to be relieved during emergency braking, the TCMS generates the isolation control signal, sends the isolation control signal to the electromagnetic valve corresponding to the bogie according to the label of the failed bogie, and then controls the electromagnetic valve to act correspondingly according to the isolation control signal, thereby cutting the bogie brake off.

It is to be noted that there are multiple bogies are installed on an urban rail vehicle, and in order to determine the electromagnetic valve corresponding to each bogie, in the application, the failed bogie in the multiple bogies is recognized through a Brake Control Unit (BCU), and the label of the failed bogie is sent to the TCMS through a network; in such a manner, when the brake of a certain bogie is not able to be relieved, the TCMS may cut the bogie off merely by controlling the electromagnetic valve corresponding to the bogie whose brake is not able to be relieved, thereby increasing efficiency of the TCMS in controlling the urban rail vehicle.

According to the above embodiment of the present invention, when the bogie brake is not able to be relieved, the cutting-off signal output from the OCC is received, the logic operation is performed on the cutting-off signal to obtain the isolation control signal, and the electromagnetic valve corresponding to the bogie is controlled to act; in such a manner, the purpose of remotely cutting off the bogie whose brake is not able to be relieved is achieved, and the technical problem that a brake cutting-off valve is set under a passenger seat to cut the single bogie brake off in the existing urban rail vehicle, but the requirements of the unmanned vehicle cannot be met is solved, thereby increasing efficiency in solving problems in a fault state, and meeting the requirements of the unmanned vehicle.

Alternatively, in the above embodiment of the present invention, that the electromagnetic valve corresponding to the bogie is controlled according to the isolation control signal to act at S106 includes the following steps.

At S1062, an electromagnetic sub-valve in the electromagnetic valve is controlled according to the isolation control signal to act, and a corresponding isolation pneumatic control signal is generated.

At S1064, a pneumatic control valve in the electromagnetic valve is controlled according to the isolation pneumatic control signal to act.

As shown in Fig. 2, in an alternative solution, the electromagnetic sub-valve may be the electromagnetic valve B05 in the bogie isolation electromagnetic valve, and the pneumatic control valve may be the pneumatic control valve B06 in the bogie isolation electromagnetic valve. Each bogie is equipped with a set of bogie isolation electromagnetic valves (B05, B06). The TCMS may output bogie brake isolation control corresponding to the B05 to control the B05 to act, and output isolation pneumatic control corresponding to the B06 to control the B06 to act.

Through the steps from S1062 to S1064, by controlling the electromagnetic sub-valve to act through the isolation control signal and controlling the pneumatic control valve to act through the corresponding isolation pneumatic control signal, air supply from a main air reservoir of vehicle to the BCU of the bogie is cut off, thereby cutting the air braking force of the bogie, and achieving the purpose of cutting large-flow gas off.

Alternatively, in the above embodiment of the present invention, when or after the electromagnetic valve corresponding to the bogie is controlled according to the isolation control signal to act at S106, the method further includes the following steps.

At S108, a corresponding remote cutting-off feedback signal is generated according to the cutting-off signal.

At S110, the remote cutting-off feedback signal is output to the BCU corresponding to the bogie through a Multifunction Vehicle Bus (MVB).

As shown in Fig. 2, in an alternative solution, the TCMS sends the remote cutting-off feedback signal corresponding to the vehicle and the bogie to the BCU through the MVB while sending the corresponding bogie brake isolation control to the bogie isolation electromagnetic valve.

Through the steps from S108 to S110, the TCMS outputs, through the MVB, the remote cutting-off feedback signal to the BCU corresponding to the vehicle and the bogie, thereby achieving the purpose of remotely cutting the bogie brake off.

Alternatively, in the above embodiment of the present invention, after the electromagnetic valve corresponding to the bogie is controlled according to the isolation control signal to act at S106, the method further includes the following steps.

At S112, air supply pressure of the bogie is detected through a pressure switch device.

At S114, it is determined, according to the air supply pressure of the bogie, whether the bogie brake is cut off successfully.

As shown in Fig. 2, in an alternative solution, the TCMS may detect the air supply pressure of the corresponding bogie through a pressure switch B08, and determine, according to the air supply pressure of the bogie, whether the air supply of the bogie is cut off as required.

Through the steps from S112 to S114, the air supply pressure of the bogie is detected through the pressure switch device, and it is determined, according to the air supply pressure of the bogie, whether the bogie brake is cut off successfully, thereby ensuring that the bogie brake may be remotely cut off.

Alternatively, in the above embodiment of the present invention, the step of determining, according to the air supply pressure of the bogie, whether the bogie brake is cut off successfully at S114 includes the following steps.

At S1142, when it is detected that the air supply pressure of the bogie is less than or equal to a preset threshold, it is determined that the bogie brake is cut off successfully.

At S1144, when it is detected that the air supply pressure of the bogie is greater than the preset threshold, it is determined that the bogie brake is cut off unsuccessfully.

The above preset threshold may be 50kPa.

In an alternative solution, when the pressure switch B08 detects that the air supply pressure (800-950kPa) decreases to 50kPa, it is determined that the main air reservoir of vehicle is cut off, the bogie brake is cut off successfully, and the bogie brake is relieved; when the pressure switch B08 detects that the air supply pressure (800-950kPa) does not decrease to 50kPa, it is determined that the main air reservoir of vehicle is not cut off, the bogie brake is cut off unsuccessfully, and the bogie brake is not relieved.

Through the steps from S1142 to S1144, it is determined whether the bogie brake is cut off successfully by judging whether the detected air supply pressure of the bogie is less than the preset threshold, thereby ensuring that the bogie brake can be cut off remotely.

Alternatively, in the above embodiment of the present invention, after determining, according to the air supply pressure of the bogie, whether the bogie brake is cut off successfully at S114, the method further includes the following steps.

At S116, a prompt message for prompting a user whether the bogie brake is cut off successfully is generated.

At S118, the prompt message is output to the OCC.

In an alternative solution, the TCMS generates the prompt message for prompting the user whether the bogie brake is cut off successfully, and sends the prompt message to the OCC; the OCC displays the prompt message to inform the user that the bogie brake of the vehicle has cut off successfully and the bogie brake is relieved or inform the user that the bogie brake of the vehicle is cut off unsuccessfully and the bogie brake is not relieved.

Through the steps from S116 to S118, the TCMS generates the prompt message and outputs the generated the prompt message to the OCC, and the OCC displays the prompt message, thereby prompting the user to determine whether the bogie brake is cut off successfully during unmanned driving, and ensuring accuracy and timeliness of cutting the bogie brake off.

Alternatively, in the above embodiment of the present invention, after determining, according to the air supply pressure of the bogie, whether the bogie brake is cut off successfully at S114, the method further includes the following steps.

At S120, the prompt message for prompting the user whether the bogie brake is cut off successfully is generated and displayed.

In an alternative solution, the TCMS generates and displays the prompt message for prompting the user whether the bogie brake is cut off successfully to inform the user that the bogie brake of the vehicle has cut off successfully and the bogie brake is relieved or inform the user that the bogie brake of the vehicle is cut off unsuccessfully and the bogie brake is not relieved.

Through the steps from S116 to S118, the TCMS generates and displays the prompt information, thereby prompting the user to determine whether the bogie brake is cut off successfully during manual driving, and ensuring accuracy and timeliness of cutting the bogie brake off.

It is to be noted here that as shown in Fig. 2, the brake cutting-off valve B19 under the passenger seat is still retained while a remote cutting-off function is implemented, so that the B19 can be manually controlled to act to cut off braking air supply of the corresponding bogie during manual driving.

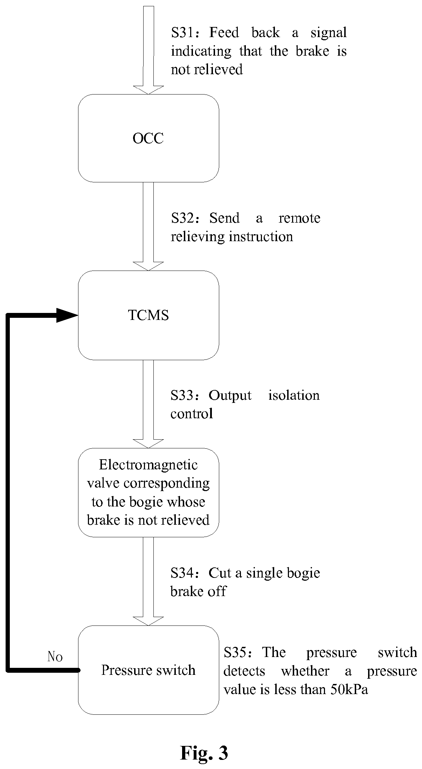

A preferred embodiment of the present invention is elaborated below in combination with Fig. 3. As shown in Fig. 3, the method includes the following steps.

At S31, a signal indicating that the brake is not relieved is fed back to the OCC.

Alternatively, when the bogie brake is not able to be relieved, the signal indicating that the brake is not relieved is generated and sent to the OCC.

At S32, the OCC sends a remote relieving signal to the TCMS.

Alternatively, the remote relieving signal may be the bogie brake cutting-off signal output from the OCC.

At S33, the TCMS outputs isolation control of the electromagnetic valve corresponding to the bogie not relieved.

Alternatively, the bogie isolation control of the electromagnetic valve corresponding to the bogie not relieved is output through the TCMS software logic.

At S34, the single bogie brake is cut off.

Alternatively, the electromagnetic valve acts under the bogie isolation control to cut off the bogie brake with single brake not relieved.

At S35, the pressure switch detects whether a pressure value is less than 50kPa.

Alternatively, when detecting that the pressure value is greater than or equal to 50kPa, the pressure switch generates the signal indicating that the brake is not relieved to the TCMS, and then the TMCS controls the electromagnetic valve to act again to cut off the bogie brake with single brake not relieved.

Through the solution provided by the steps, the purpose of remotely cutting off the bogie whose brake cannot be relieved can be achieved, thereby increasing efficiency in solving problems in a fault state, and meeting the requirements of the unmanned vehicle.

### Embodiment 2

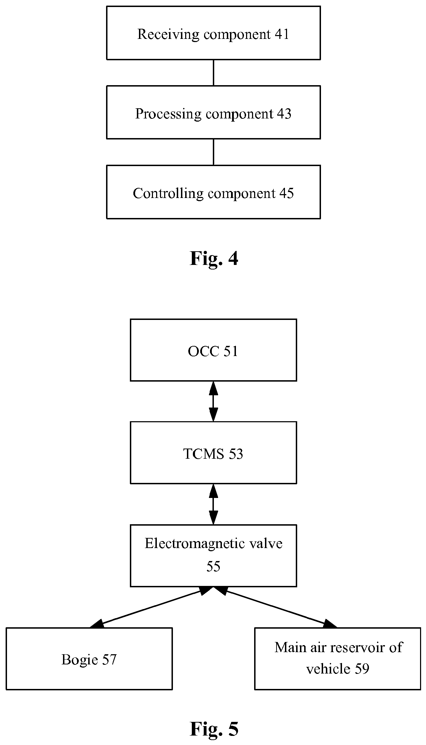

An embodiment of a device for cutting a bogie brake off is provided. Fig. 4 is a schematic diagram of the device for cutting a bogie brake off according to the preferred embodiment of the invention. As shown in Fig. 4, the device includes:
a receiving component 41, which is configured to, when the bogie brake is not able to be relieved, receive the cutting-off signal output from the OCC, wherein the cutting-off signal is used for triggering the action of cutting the bogie brake off;
a processing component 43, which is configured to perform the logic operation on the cutting-off signal to obtain the isolation control signal;
a controlling component 45, which is configured to control, according to the isolation control signal, the electromagnetic valve corresponding to the bogie to act, so as to cut the bogie brake off; wherein the processing component 43 is further configured to parse the received cutting-off signal to obtain fault data, wherein the fault data includes a label of a failed bogie and a fault type of the failed bogie; to determine the label of the failed bogie and to generate the isolation control signal when determining that the failed bogie is not able to be relieved during emergency braking.

The electromagnetic valve may be the bogie isolation electromagnetic valve.

As shown in Fig. 2, in an alternative solution, each bogie is equipped with the corresponding electromagnetic valve; when the bogie brake is not able to be relieved, including emergency braking, it is possible to output the bogie brake cutting-off signal through the OCC and output the bogie brake isolation control corresponding to the electromagnetic valve through the TCMS software logic; and after the bogie is remotely cut off, the bogie loses the air braking force including emergency braking.

According to the above embodiment of the present invention, when the bogie brake is not able to be relieved, the cutting-off signal output from the OCC is received, then the logic operation is performed on the cutting-off signal to obtain the isolation control signal, and at last, the electromagnetic valve corresponding to the bogie is controlled to act; in such a manner, the purpose of remotely cutting off the bogie whose brake cannot be relieved is achieved, and the technical problem that the brake cutting-off valve is set under the passenger seat to cut the single bogie brake off in the existing urban rail vehicle, but the requirements of the unmanned vehicle cannot be met is solved, thereby increasing efficiency in solving problems in a fault state, and meeting the requirements of the unmanned vehicle.

It is to be noted here that the receiving component 41, the processing component 43 and the controlling component 45 may run in computer terminals as a part of the device, and the functions implemented by modules may be executed through a processor in the computer terminals. The computer terminals may also be smartphones (such as an Android phone and an iOS phone), tablet PCs, PDAs, Mobile Internet Devices (MIDs), PADs and other terminal devices.

Alternatively, in the above embodiment of the present invention, the controlling component 45 includes:
a first controlling sub-component, which is configured to control according to the isolation control signal the electromagnetic sub-valve in the electromagnetic valve to act, and generate the corresponding isolation pneumatic control signal; and
a second controlling sub-component, which is configured to control according to the isolation pneumatic control signal the pneumatic control valve in the electromagnetic valve to act.

As shown in Fig. 2, in an alternative solution, the first electromagnetic sub-valve may be the electromagnetic valve B05 in the bogie isolation electromagnetic valve, and the pneumatic control valve may be the pneumatic control valve B06 in the bogie isolation electromagnetic valve. Each bogie is equipped with a set of bogie isolation electromagnetic valves (B05, B06). The TCMS may output the bogie brake isolation control corresponding to the B05 to control the B05 to act, and output the isolation pneumatic control corresponding to the B06 to control the B06 to act.

Through the above solution, by controlling the electromagnetic sub-valve to act through the isolation control signal and controlling the pneumatic control valve to act through the corresponding isolation pneumatic control signal, the air supply from the main air reservoir of vehicle to the BCU of the bogie is cut off, thereby cutting the air braking force of the bogie, and achieving the purpose of cutting large-flow gas off.

It is to be noted here that the first controlling sub-component and the second controlling sub-component may run in the computer terminals as a part of the device, and the functions implemented by modules may be executed through the processor in the computer terminals. The computer terminals may also be smartphones (such as an Android phone and an iOS phone), tablet PCs, PDAs, MIDs, PADs and other terminal devices.

Alternatively, in the above embodiment of the present invention, the device further includes:
a generating component, which is configured to generate the corresponding remote cutting-off feedback signal according to the cutting-off signal; and
an outputting component, which is configured to output the remote cutting-off feedback signal to the BCU corresponding to the bogie through the MVB.

As shown in Fig. 2, in an alternative solution, the TCMS sends the remote cutting-off feedback signal corresponding to the vehicle and the bogie to the BCU through the MVB while sending the corresponding bogie brake isolation control to the bogie isolation electromagnetic valve.

Through the above solution, the TCMS outputs, through the MVB, the remote cutting-off feedback signal to the BCU corresponding to the vehicle and the bogie, thereby achieving the purpose of remotely cutting the bogie brake off.

It is to be noted here that the generating component and the outputting component may run in the computer terminals as a part of the device, and the functions implemented by modules may be executed through the processor in the computer terminals. The computer terminals may also be smartphones (such as an Android phone and an iOS phone), tablet PCs, PDAs, MIDs, PADs and other terminal devices.

Alternatively, in the above embodiment of the present invention, the device further includes:
a detecting component, which is configured to detect the air supply pressure of the bogie through the pressure switch device; and
a determining component, which is configured to determine, according to the air supply pressure of the bogie, whether the bogie brake is cut off successfully.

As shown in Fig. 2, in an alternative solution, the TCMS may detect the air supply pressure of the corresponding bogie through the pressure switch B08, and determine, according to the air supply pressure of the bogie, whether the air supply of the bogie is cut off as required.

Through the above solution, the air supply pressure of the bogie is detected through the pressure switch device, and it is determined, according to the air supply pressure of the bogie, whether the bogie brake is cut off successfully, thereby ensuring that the bogie brake may be remotely cut off.

It is to be noted here that the detecting component and the determining component may run in the computer terminals as a part of the device, and the functions implemented by modules may be executed through the processor in the computer terminals. The computer terminals may also be smartphones (such as an Android phone and an iOS phone), tablet PCs, PDAs, MIDs, PADs and other terminal devices.

Alternatively, in the above embodiment of the present invention, the determining component includes:
a first determining sub-component, which is configured to, when it is detected that the air supply pressure of the bogie is less than or equal to the preset threshold, determine that the bogie brake is cut off successfully; and
a second determining sub-component, which is configured to, when it is detected that the air supply pressure of the bogie is greater than the preset threshold, determine that the bogie brake is cut off unsuccessfully.

The above preset threshold may be 50kPa.

In an alternative solution, when the pressure switch B08 detects that the air supply pressure (800-950kPa) decreases to 50kPa, it is determined that the main air reservoir of vehicle is cut off, the bogie brake is cut off successfully, and the bogie brake is relieved; when the pressure switch B08 detects that the air supply pressure (800-950kPa) does not decrease to 50kPa, it is determined that the main air reservoir of vehicle is not cut off, the bogie brake is cut off unsuccessfully, and the bogie brake is not relieved.

Through the above solution, it is determined whether the bogie brake is cut off successfully by judging whether the detected air supply pressure of the bogie is less than the preset threshold, thereby ensuring that the bogie brake can be cut off remotely.

It is to be noted here that the first determining sub-component and the second determining sub-component may run in the computer terminals as a part of the device, and the functions implemented by modules may be executed through the processor in the computer terminals. The computer terminals may also be smartphones (such as an Android phone and an iOS phone), tablet PCs, PDAs, MIDs, PADs and other terminal devices.

Alternatively, in the above embodiment of the present invention, the device further includes:
a prompt message generating component, which is configured to generate the prompt message for prompting the user whether the bogie brake is cut off successfully; and
a prompt message outputting component, which is configured to output the prompt message to the OCC.

In an alternative solution, the TCMS generates the prompt message for prompting the user whether the bogie brake is cut off successfully, and sends the prompt message to the OCC; the OCC displays the prompt message to inform the user that the bogie brake of the vehicle has cut off successfully and the bogie brake is relieved or inform the user that the bogie brake of the vehicle is cut off unsuccessfully and the bogie brake is not relieved.

Through the above solution, the TCMS generates the prompt message and outputs it to the OCC, and the OCC displays the prompt message, thereby prompting the user to determine whether the bogie brake is cut off successfully during unmanned driving, and ensuring accuracy and timeliness of cutting the bogie brake off.

It is to be noted here that the prompt message generating component and the prompt message outputting component may run in the computer terminals as a part of the device, and the functions implemented by modules may be executed through the processor in the computer terminals. The computer terminals may also be smartphones (such as an Android phone and an iOS phone), tablet PCs, PDAs, MIDs, PADs and other terminal devices.

Alternatively, in the above embodiment of the present invention, the device further includes:
a displaying component, which is configured to generate and display the prompt message for prompting the user whether the bogie brake is cut off successfully.

In an alternative solution, the TCMS generates and displays the prompt message for prompting the user whether the bogie brake is cut off successfully to inform the user that the bogie brake of the vehicle has cut off successfully and the bogie brake is relieved or inform the user that the bogie brake of the vehicle is cut off unsuccessfully and the bogie brake is not relieved.

Through the above solution, the TCMS generates and displays the prompt information, thereby prompting the user to determine whether the bogie brake is cut off successfully during manual driving, and ensuring accuracy and timeliness of cutting the bogie brake off.

It is to be noted here that as shown in Fig. 2, the brake cutting-off valve B19 under the passenger seat is still retained while the remote cutting-off function is implemented, so that the B19 can be manually controlled to act to cut off the braking air supply of the corresponding bogie during manual driving.

It is to be noted here that the displaying component may run in the computer terminals as a part of the device, and the function implemented by a module may be executed through the processor in the computer terminals. The computer terminals may also be smartphones (such as an Android phone and an iOS phone), tablet PCs, PDAs, MIDs, PADs and other terminal devices.

### Embodiment 3

An embodiment of a system for cutting a bogie brake off is provided. Fig. 5 is a schematic diagram of the system for cutting a bogie brake off according to the preferred embodiment of the invention. As shown in Fig. 5, the system includes:
the OCC 51, which is configured to, when the bogie brake is not able to be relieved, output the cutting-off signal, wherein the cutting-off signal is used for triggering the action of cutting the bogie brake off;
the TCMS 53, which communicates with the OCC 51, and is configured to perform the logic operation on the received cutting-off signal to obtain the isolation control signal; and
the electromagnetic valve 55, which is connected with the TCMS 53, the bogie 57 and the main air reservoir of vehicle 59, and is configured to act according to the isolation control signal, so as to cut the bogie brake off; wherein the TCMS 53 is further configured to parse the received cutting-off signal to obtain fault data, wherein the fault data includes a label of a failed bogie and a fault type of the failed bogie; to determine the label of the failed bogie and to generate the isolation control signal when determining that the failed bogie is not able to be relieved during emergency braking.

As shown in Fig. 2, in an alternative solution, each bogie is equipped with the corresponding electromagnetic valve; when the bogie brake is not able to be relieved, including emergency braking, it is possible to output the bogie brake cutting-off signal through the OCC and output the bogie brake isolation control corresponding to the electromagnetic valve through the TCMS software logic; and after the bogie is remotely cut off, the bogie loses the air braking force including emergency braking.

According to the above embodiment of the present invention, when the bogie brake is not able to be relieved, the cutting-off signal output from the OCC is received, then the logic operation is performed on the cutting-off signal to obtain the isolation control signal, and at last, the electromagnetic valve corresponding to the bogie is controlled to act; in such a manner, the purpose of remotely cutting off the bogie whose brake cannot be relieved is achieved, and the technical problem that the brake cutting-off valve is set under the passenger seat to cut the single bogie brake off in the existing urban rail vehicle, but the requirements of the unmanned vehicle cannot be met is solved, thereby increasing efficiency in solving problems in a fault state, and meeting the requirements of the unmanned vehicle.

Alternatively, in the above embodiment of the present invention, the electromagnetic valve 55 includes:
the electromagnetic sub-valve, which is connected with the TCMS 53 and the main air reservoir of vehicle 59, and is configured to act according to the isolation control signal, and generate the corresponding isolation pneumatic control signal; and
the pneumatic control valve, which is connected with the electromagnetic sub-valve, the bogie 57 and the main air reservoir of vehicle 59, and is configured to act according to the isolation pneumatic control signal.

As shown in Fig. 2, in an alternative solution, the first electromagnetic sub-valve may be the electromagnetic valve B05 in the bogie isolation electromagnetic valve, and the pneumatic control valve may be the pneumatic control valve B06 in the bogie isolation electromagnetic valve. Each bogie is equipped with a set of bogie isolation electromagnetic valves (B05, B06). The TCMS may output the bogie brake isolation control corresponding to the B05 to control the B05 to act, and output the isolation pneumatic control corresponding to the B06 to control the B06 to act.

Through the above solution, by controlling the electromagnetic sub-valve to act through the isolation control signal and controlling the pneumatic control valve to act through the corresponding isolation pneumatic control signal, the air supply from the main air reservoir of vehicle to the BCU of the bogie is cut off, thereby cutting the air braking force of the bogie, and achieving the purpose of cutting large-flow gas off.

Alternatively, in the above embodiment of the present invention, the system further includes:
the BCU, which is connected with the electromagnetic valve 55, the TCMS 53 and the bogie 57, and is configured to receive the remote cutting-off feedback signal corresponding to the cutting-off signal, wherein the TCMS generates the remote cutting-off feedback signal according to the cutting-off signal.

As shown in Fig. 2, in an alternative solution, the TCMS sends the remote cutting-off feedback signal corresponding to the vehicle and the bogie to the BCU through the MVB while sending the corresponding bogie brake isolation control to the bogie isolation electromagnetic valve.

Through the above solution, the TCMS outputs, through the MVB, the remote cutting-off feedback signal to the BCU corresponding to the vehicle and the bogie, thereby achieving the purpose of remotely cutting the bogie brake off.

Alternatively, in the above embodiment of the present invention, the system further includes:
the pressure switch device, which is configured to detect the air supply pressure of the bogie.

The TCMS 53 is further configured to determine whether the bogie brake is cut off successfully according to the air supply pressure of the bogie.

As shown in Fig. 2, in an alternative solution, the TCMS may detect the air supply pressure of the corresponding bogie through the pressure switch B08, and determine, according to the air supply pressure of the bogie, whether the air supply of the bogie is cut off as required. When the pressure switch B08 detects that the air supply pressure (800-950kPa) decreases to 50kPa, it is determined that the main air reservoir of vehicle is cut off, the bogie brake is cut off successfully, and the bogie brake is relieved; when the pressure switch B08 detects that the air supply pressure (800-950kPa) does not decrease to 50kPa, it is determined that the main air reservoir of vehicle is not cut off, the bogie brake is cut off unsuccessfully, and the bogie brake is not relieved.

Through the above solution, the air supply pressure of the bogie is detected through the pressure switch device, and it is determined whether the bogie brake is cut off successfully according to the air supply pressure of the bogie, thereby ensuring that the bogie brake can be cut off remotely.

It is to be noted here that as shown in Fig. 2, the brake cutting-off valve B19 under the passenger seat is still retained while the remote cutting-off function is implemented, so that the B19 can be manually controlled to act to cut off the braking air supply of the corresponding bogie during manual driving.

All the function units provided in the embodiments of the application may run in mobile terminals, computer terminals or the similar operating devices, and may also be stored as a part of storage media.

So, an embodiment of the present invention may provide a computer terminal. The computer terminal may be any computer terminal device in a group of computer terminals. Alternatively, in the embodiment, the computer terminal may also be replaced with the mobile terminal and other terminal devices.

Alternatively, in the embodiment, the computer terminal may be in at least one of multiple network devices of a computer network.

In the embodiment, the computer terminal may execute program codes of the following steps in the method for cutting a bogie brake off: when the bogie brake is not able to be relieved, the cutting-off signal output from the OCC is received, wherein the cutting-off signal is used for triggering the action of cutting the bogie brake off; the logic operation is performed on the cutting-off signal to obtain the isolation control signal; and the electromagnetic valve corresponding to the bogie is controlled according to the isolation control signal to act, so as to cut the bogie brake off.

Alternatively, the computer terminal may include: one or more than one processor, a memory and a transmission device.

Herein, the memory may be configured to store a software program and module, for example, a program instruction/module corresponding to the method for cutting a bogie brake off; the processor executes various function applications and data processing by running the software program and module stored in the memory, namely implementing the method for cutting a bogie brake off. The memory may include a high-speed Random Access Memory (RAM), and may also include a nonvolatile memory, for example, one or more than one magnetic storage device, a flash memory, or other nonvolatile solid state memory. In some examples, the memories may further include memories remotely set relative to the processor, and these remote memories may be connected to the terminal through networks. The examples of the networks include, but not limited to, Internet, Intranet, LAN, mobile communication networks and a combination of them.

The transmission device is configured to receive or send data via a network. The specific examples of the networks may include wired networks and wireless networks. In an example, the transmission device includes a Network Interface Controller (NIC), which may be connected with other network devices and routers through network cables to communicate with the Internet or the LAN. In an example, the transmission device is a Radio Frequency (RF) module, which is configured to communicate with the Internet wirelessly.

Particularly, the memory is configured to store information of a preset action condition and a preset permission user, and an application program.

The processor may call through the transmission device the information and the application program stored in the memory, so as to execute the program codes of the steps in each alternative or preferred embodiment of the method.

Those of ordinary skill in the art may understand that the computer terminals may also be smartphones (such as an Android phone and an iOS phone), tablet PCs, PDAs, MIDs, PADs and other terminal devices.

Those of ordinary skill in the art may understand that all or part of the steps in the method of the above embodiments may be performed by hardware related to the terminal devices instructed by a program; the program may be stored in computer readable storage media. The storage media may include: a flash disk, a Read-Only Memory (ROM), an RAM, a magnetic disk or a compact disc.

An embodiment of the present invention also provides a storage medium. Alternatively, in the embodiment, the storage medium may be configured to store the program codes executed by the method for cutting a bogie brake off which is provided by the embodiment of the method and the embodiment of the device.

Alternatively, in the embodiment, the storage medium may be in any one of a group of computer terminals in a computer network, or any one of a group of mobile terminals.

Alternatively, in the embodiment, the storage medium is configured to store the program codes used for performing the following steps: when the bogie brake is not able to be relieved, the cutting-off signal output from the OCC is received, wherein the cutting-off signal is used for triggering the action of cutting the bogie brake off; the logic operation is performed on the cutting-off signal to obtain the isolation control signal; and the electromagnetic valve corresponding to the bogie is controlled according to the isolation control signal to act, so as to cut the bogie brake off.

Alternatively, in the embodiment, the storage medium may be further configured as the program codes of the steps in each alternative or preferred embodiment of the method for cutting a bogie brake off.

The method, device and system for cutting a bogie brake off according to the preferred embodiment of the invention are exemplarily described above with reference to the accompanying drawings. However, those skilled in the art should understand that for the method, device and system for cutting a bogie brake off presented in the preferred embodiment of the invention, various improvements may also be made on the basis of not departing from the contents of the present invention. Therefore, the protection scope of the present invention should be determined by the contents of the claims attached.

Moreover, according to another aspect of the present invention, a storage medium is also provided. The storage medium includes a stored program, wherein the program performs the method for cutting a bogie brake off in embodiment 1.

According to another aspect of the present invention, a processor is also provided. The processor is configured to run a program, wherein when the program is run, it performs the method for cutting a bogie brake off in embodiment 1.

The above sequence numbers of the embodiments of the present invention are just for describing, instead of representing superiority-inferiority of the embodiments.

In the above embodiments of the present invention, the descriptions of the embodiments focus on different aspects. The part which is not described in a certain embodiment in detail may refer to the related description of the other embodiments.

In the several embodiments provided in the application, it should be understood that the technical contents disclosed may be realized in other ways. Herein, the embodiment of the device described above is only schematic; for example, the division of the units is only a division of logical functions, and there may be other dividing modes during the actual implementation, for example, multiple units or components may be combined or integrated to another system, or some features may be ignored or are not executed. In addition, coupling, direct coupling, or communication connection shown or discussed may be implemented through indirect coupling or communication connection of some interfaces, units or modules, and may be in an electrical form or other forms.

The units described as separate parts may be or may not be separate physically. The part shown as the unit may be or may not be a physical unit, that is to say, it may be in a place or distributed on multiple network units. It is possible to select, according to the actual needs, part or all of the units to achieve the objective of the solutions.

Moreover, all the function units in the embodiments of the present invention may be integrated in a processing unit; or the units exist separately and physically; or two or more than two units are integrated in a unit. The integrated unit may be realized in form of hardware or in form of software function unit.

If the integrated unit is implemented by software function modules, and the software function modules are sold or used as independent products, they can also be stored in a computer readable storage medium. Based on this understanding, the technical solutions in the embodiments of the present invention substantially or the part making a contribution to the traditional art can be embodied in the form of software product; the computer software product is stored in a storage medium and includes a number of instructions to make a computer device (which can be a personal computer, a server or a network device, etc.) perform all or part of the method in each embodiment of the present invention. The above storage media include: a USB flash disk, an ROM, an RAM, a mobile hard disk, a magnetic disk or a compact disc, and other media which can store program codes.

## Claims

1. A method for cutting a bogie brake off, comprising:
when a bogie brake is not able to be relieved, receiving a cutting-off signal output from an Operating Control Center, OCC, wherein the cutting-off signal is used for triggering an action of cutting the bogie brake off;
performing a logic operation on the cutting-off signal to obtain an isolation control signal; and
controlling according to the isolation control signal an electromagnetic valve corresponding to a bogie to act, so as to cut the bogie brake off;
the method for cutting the bogie brake off being **characterised in that** performing the logic operation on the cutting-off signal to obtain an isolation control signal comprises: parsing the received cutting-off signal to obtain fault data, wherein the fault data includes a label of a failed bogie and a fault type of the failed bogie; determining the label of the failed bogie and generating the isolation control signal when determining that the failed bogie is not able to be relieved during emergency braking.

2. The method as claimed in claim 1, wherein controlling according to the isolation control signal the electromagnetic valve corresponding to the bogie to act comprises:
controlling according to the isolation control signal an electromagnetic sub-valve in the electromagnetic valve to act, and generating a corresponding isolation pneumatic control signal; and
controlling according to the isolation pneumatic control signal a pneumatic control valve in the electromagnetic valve to act.

3. The method as claimed in claim 1 or 2, wherein when or after controlling according to the isolation control signal the electromagnetic valve corresponding to the bogie to act, further comprising:
generating a corresponding remote cutting-off feedback signal according to the cutting-off signal; and
outputting the remote cutting-off feedback signal to a Brake Control Unit, BCU, corresponding to the bogie through a Multifunction Vehicle Bus, MVB.

4. The method as claimed in claim 1 or 2, wherein after controlling according to the isolation control signal the electromagnetic valve corresponding to the bogie to act, further comprising:
detecting air supply pressure of the bogie through a pressure switch device; and
determining, according to the air supply pressure of the bogie, whether the bogie brake is cut off successfully.

5. The method as claimed in claim 4, wherein determining, according to the air supply pressure of the bogie, whether the bogie brake is cut off successfully comprises:
when it is detected that the air supply pressure of the bogie is less than or equal to a preset threshold, determining that the bogie brake is cut off successfully; and
when it is detected that the air supply pressure of the bogie is greater than the preset threshold, determining that the bogie brake is cut off unsuccessfully.

6. The method as claimed in claim 4, wherein after determining, according to the air supply pressure of the bogie, whether the bogie brake is cut off successfully, further comprising:
generating a prompt message for prompting a user whether the bogie brake is cut off successfully; and
outputting the prompt message to the OCC.

7. The method as claimed in claim 4, wherein after determining, according to the air supply pressure of the bogie, whether the bogie brake is cut off successfully, further comprising:
generating and displaying a prompt message for prompting a user whether the bogie brake is cut off successfully.

8. A device for cutting a bogie brake off, comprising:
a receiving component, which is configured to, when a bogie brake is not able to be relieved, receive a cutting-off signal output from an Operating Control Center, OCC, wherein the cutting-off signal is used for triggering an action of cutting the bogie brake off;
a processing component, which is configured to perform a logic operation on the cutting-off signal to obtain an isolation control signal; and
a controlling component, configured to control according to the isolation control signal an electromagnetic valve corresponding to a bogie to act, so as to cut the bogie brake off;
the device for cutting the bogie brake off being **characterised in that** the processing component is further configured to parse the received cutting-off signal to obtain fault data, wherein the fault data includes a label of a failed bogie and a fault type of the failed bogie; to determine the label of the failed bogie and to generate the isolation control signal when determining that the failed bogie is not able to be relieved during emergency braking.

9. The device as claimed in claim 8, wherein the controlling component comprises:
a first controlling sub-component, which is configured to control according to the isolation control signal an electromagnetic sub-valve in the electromagnetic valve to act, and generate a corresponding isolation pneumatic control signal; and
a second controlling sub-component, which is configured to control according to the isolation pneumatic control signal a pneumatic control valve in the electromagnetic valve to act.

10. The device as claimed in claim 8 or 9, further comprising:
a generating component, which is configured to generate a corresponding remote cutting-off feedback signal according to the cutting-off signal; and
an outputting component, which is configured to output the remote cutting-off feedback signal to a Brake Control Unit, BCU, corresponding to the bogie through a Multifunction Vehicle Bus, MVB.

11. The device as claimed in claim 8 or 9, further comprising:
a detecting component, which is configured to detect air supply pressure of the bogie through a pressure switch device; and
a determining component, which is configured to determine, according to the air supply pressure of the bogie, whether the bogie brake is cut off successfully.

12. A system for cutting a bogie brake off, comprising:
an Operating Control Center, OCC, which is configured to, when a bogie brake is not able to be relieved, output a cutting-off signal, wherein the cutting-off signal is used for triggering an action of cutting the bogie brake off;
a Train Control and Management System, TCMS, which communicates with the OCC, and is configured to perform a logic operation on the received cutting-off signal to obtain an isolation control signal; and
an electromagnetic valve, which is connected with the TCMS, a bogie and a main air reservoir of vehicle, and is configured to act according to the isolation control signal, so as to cut the bogie brake off;
the system for cutting the bogie brake off being **characterised in that** the TCMS is further configured to parse the received cutting-off signal to obtain fault data, wherein the fault data includes a label of a failed bogie and a fault type of the failed bogie; to determine the label of the failed bogie and to generate the isolation control signal when determining that the failed bogie is not able to be relieved during emergency braking.

13. The system as claimed in claim 12, wherein the electromagnetic valve comprises:
an electromagnetic sub-valve, which is connected with the TCMS and the main air reservoir of vehicle, and is configured to act according to the isolation control signal, and generate a corresponding isolation pneumatic control signal; and
a pneumatic control valve, which is connected with the electromagnetic sub-valve, the bogie and the main air reservoir of vehicle, and is configured to act according to the isolation pneumatic control signal.

14. The system as claimed in claim 12 or 13, further comprising:
a Brake Control Unit, BCU, which is connected with the electromagnetic valve, the TCMS and the bogie, and is configured to receive a remote cutting-off feedback signal corresponding to the cutting-off signal, wherein the TCMS generates the remote cutting-off feedback signal according to the cutting-off signal.

15. The system as claimed in claim 12 or 13, further comprising:
a pressure switch device, which is configured to detect air supply pressure of the bogie;
the TCMS is further configured to determine whether the bogie brake is cut off successfully according to the air supply pressure of the bogie.

## Patentansprüche

1. Verfahren zum Abschalten einer Drehgestellbremse, bei dem:
dann, wenn eine Drehgestellbremse nicht entlastet werden kann, ein von einer Betriebssteuerzentrale (Operating Control Center (OCC)) abgegebenes Abschaltsignal empfangen wird, wobei das Abschaltsignal zum Auslösen einer Aktion des Abschaltens der Drehgestellbremse verwendet wird,
eine logische Operation an dem Abschaltsignal durchgeführt wird, um ein Trennungsansteuersignal zu erhalten, und
entsprechend dem Trennungsansteuersignal ein einem Drehgestell entsprechendes Elektromagnetventil so angesteuert wird, dass es so wirkt, dass die Drehgestellbremse abgeschaltet wird,
wobei das Verfahren zum Abschalten der Drehgestellbremse **dadurch gekennzeichnet ist, dass** das Durchführen der logischen Operation an dem Abschaltsignal zum Erhalten eines Trennungsansteuersignals Folgendes umfasst: Analysieren des empfangenen Abschaltsignals zum Erhalten von Fehlerdaten, wobei die Fehlerdaten eine Kennzeichnung eines ausgefallenen Drehgestells und einen Fehlertyp des ausgefallenen Drehgestells enthalten, Bestimmen der Kennzeichnung des ausgefallenen Drehgestells und Erzeugen des Trennungsansteuersignals, wenn festgestellt wird, dass das ausgefallene Drehgestell während einer Notbremsung nicht entlastet werden kann.

2. Verfahren nach Anspruch 1, wobei das Ansteuern des dem Drehgestell entsprechenden Elektromagnetventils entsprechend dem Trennungsansteuersignal derart, dass es wirkt, Folgendes umfasst:
Ansteuern eines Elektromagnetteilventils in dem Elektromagnetventil entsprechend dem Trennungsansteuersignal so, dass es wirkt, und Erzeugen eines entsprechenden Trennungspneumatikansteuersignals, und
Ansteuern eines pneumatischen Steuerventils in dem Elektromagnetventil entsprechend dem Trennungspneumatikansteuersignal so, dass es wirkt.

3. Verfahren nach Anspruch 1 oder 2, wobei es bei oder nach der Ansteuerung des dem Drehgestell entsprechenden Elektromagnetventils entsprechend dem Trennungsansteuersignal so, dass es wirkt, ferner Folgendes umfasst:
Erzeugen eines entsprechenden Fernabschaltrückmeldesignals entsprechend dem Abschaltsignal und
Abgeben des Fernabschaltrückmeldesignals an eine Bremssteuereinheit (Brake Control Unit (BCU)), die dem Drehgestell entspricht, über einen Multifunktionsfahrzeugbus (Multifunction Vehicle Bus (MVB)).

4. Verfahren nach Anspruch 1 oder 2, wobei es nach der Ansteuerung des dem Drehgestell entsprechenden Elektromagnetventils entsprechend dem Trennungsansteuersignal so, dass es wirkt, ferner Folgendes umfasst:
Erfassen eines Luftversorgungsdrucks des Drehgestells über eine Druckschaltervorrichtung, und
Feststellen, entsprechend dem Luftversorgungsdruck des Drehgestells, ob die Drehgestellbremse erfolgreich abgeschaltet wird.

5. Verfahren nach Anspruch 4, wobei das Feststellen, entsprechend dem Luftversorgungsdruck des Drehgestells, ob die Drehgestellbremse erfolgreich abgeschaltet wird, Folgendes umfasst:
wenn erfasst wird, dass der Luftversorgungsdruck des Drehgestells kleiner oder gleich einem vorgegebenen Schwellenwert ist, wird festgestellt, dass die Drehgestellbremse erfolgreich abgeschaltet ist, und
wenn erfasst wird, dass der Luftversorgungsdruck des Drehgestells größer als der vorgegebene Schwellenwert ist, wird festgestellt, dass die Drehgestellbremse nicht erfolgreich abgeschaltet ist.

6. Verfahren nach Anspruch 4, wobei es nach der Feststellung entsprechend dem Luftversorgungsdruck des Drehgestells, ob die Drehgestellbremse erfolgreich abgeschaltet ist, ferner Folgendes umfasst:
Erzeugen einer Aufforderungsnachricht zum Abfragen bei einem Benutzer, ob die Drehgestellbremse erfolgreich abgeschaltet ist, und
Ausgeben der Aufforderungsnachricht an die OCC.

7. Verfahren nach Anspruch 4, wobei es nach der Feststellung entsprechend dem Luftversorgungsdruck des Drehgestells, ob die Drehgestellbremse erfolgreich abgeschaltet ist, ferner Folgendes umfasst:
Erzeugen und Anzeigen einer Aufforderungsnachricht zum Abfragen bei einem Benutzer, ob die Drehgestellbremse erfolgreich abgeschaltet ist.

8. Vorrichtung zum Abschalten einer Drehgestellbremse, mit:
einer Empfangskomponente, die so eingerichtet ist, dass sie dann, wenn eine Drehgestellbremse nicht entlastet werden kann, ein von einer Betriebssteuerzentrale (Operating Control Center (OCC)) abgegebenes Abschaltsignal empfängt, wobei das Abschaltsignal zum Auslösen einer Aktion des Abschaltens der Drehgestellbremse verwendet wird,
einer Verarbeitungskomponente, die so eingerichtet ist, dass sie eine logische Operation an dem Abschaltsignal durchführt, um ein Trennungsansteuersignal zu erhalten, und
einer Steuerkomponente, die so eingerichtet ist, dass sie entsprechend dem Trennungsansteuersignal ein einem Drehgestell entsprechendes Elektromagnetventil so ansteuert, dass es so wirkt, dass die Drehgestellbremse abgeschaltet wird,
wobei die Vorrichtung zum Abschalten der Drehgestellbremse **dadurch gekennzeichnet ist, dass** die Verarbeitungskomponente ferner so eingerichtet ist, dass sie das empfangene Abschaltsignal analysiert, um Fehlerdaten zu erhalten, wobei die Fehlerdaten eine Kennzeichnung eines ausgefallenen Drehgestells und einen Fehlertyp des ausgefallenen Drehgestells enthalten, dass sie die Kennzeichnung des ausgefallenen Drehgestells bestimmt und das Trennungsansteuersignal erzeugt, wenn sie feststellt, dass das ausgefallene Drehgestell während einer Notbremsung nicht entlastet werden kann.

9. Vorrichtung nach Anspruch 8, wobei die Steuerkomponente Folgendes umfasst:
eine erste Steuersubkomponente, die so eingerichtet ist, dass sie ein Elektromagnetteilventil in dem Elektromagnetventil entsprechend dem Trennungsansteuersignal so ansteuert, dass es wirkt, und ein entsprechendes Trennungspneumatikansteuersignal erzeugt, und
eine zweite Steuersubkomponente, die so eingerichtet ist, dass sie ein pneumatisches Steuerventil in dem Elektromagnetventil entsprechend dem Trennungspneumatikansteuersignal so ansteuert, dass es wirkt.

10. Vorrichtung nach Anspruch 8 oder 9, ferner mit:
einer Erzeugungskomponente, die so eingerichtet ist, dass sie ein entsprechendes Fernabschaltrückmeldesignal entsprechend dem Abschaltsignal erzeugt, und
einer Ausgabekomponente, die so eingerichtet ist, dass sie das Fernabschaltrückmeldesignal über einen Multifunktionsfahrzeugbus (Multifunction Vehicle Bus (MVB)) an eine dem Drehgestell entsprechende Bremssteuereinheit (Brake Control Unit (BCU)) ausgibt.

11. Vorrichtung nach Anspruch 8 oder 9, ferner mit:
einer Erfassungskomponente, die so eingerichtet ist, dass sie einen Luftversorgungsdruck des Drehgestells über eine Druckschaltervorrichtung erfasst, und
einer Feststellungskomponente, die so eingerichtet ist, dass sie entsprechend dem Luftversorgungsdruck des Drehgestells feststellt, ob die Drehgestellbremse erfolgreich abgeschaltet ist.

12. System zum Abschalten einer Drehgestellbremse, mit:
einer Betriebssteuerzentrale (Operating Control Center (OCC)), die so eingerichtet ist, dass sie dann, wenn eine Drehgestellbremse nicht entlastet werden kann, ein Abschaltsignal abgibt, wobei das Abschaltsignal zum Auslösen einer Aktion des Abschaltens der Drehgestellbremse verwendet wird,
einem Zugsteuerungs- und -managementsystem (Train Control and Management System (TCMS)), das mit der OCC in Verbindung steht und so eingerichtet ist, dass es eine logische Operation an dem empfangenen Abschaltsignal durchführt, um ein Trennungsansteuersignal zu erhalten, und
einem Elektromagnetventil, das mit dem TCMS, einem Drehgestell und einem Hauptluftbehälter des Fahrzeugs verbunden ist und so eingerichtet ist, dass es entsprechend dem Trennungsansteuersignal so wirkt, dass die Drehgestellbremse abgeschaltet wird,
wobei das System zum Abschalten der Drehgestellbremse **dadurch gekennzeichnet ist, dass** das TCMS ferner so eingerichtet ist, dass es das empfangene Abschaltsignal analysiert, um Fehlerdaten zu erhalten, wobei die Fehlerdaten eine Kennzeichnung eines ausgefallenen Drehgestells und einen Fehlertyp des ausgefallenen Drehgestells enthalten, dass es die Kennzeichnung des ausgefallenen Drehgestells bestimmt und das Trennungsansteuersignal erzeugt, wenn es feststellt, dass das ausgefallene Drehgestell während einer Notbremsung nicht entlastet werden kann.

13. System nach Anspruch 12, wobei das Elektromagnetventil Folgendes umfasst:
ein Elektromagnetteilventil, das mit dem TCMS und dem Hauptluftbehälter des Fahrzeugs verbunden ist und so eingerichtet ist, dass es entsprechend dem Trennungsansteuersignal wirkt und ein entsprechendes Trennungspneumatikansteuersignal erzeugt, und
ein pneumatisches Steuerventil, das mit dem Elektromagnetteilventil, dem Drehgestell und dem Hauptluftbehälter des Fahrzeugs verbunden ist und so eingerichtet ist, dass es entsprechend dem Trennungspneumatikansteuersignal wirkt.

14. System nach Anspruch 12 oder 13, ferner mit:
einer Bremssteuereinheit (Brake Control Unit (BCU)), die mit dem Elektromagnetventil, dem TCMS und dem Drehgestell verbunden ist und so eingerichtet ist, dass sie ein Fernabschaltrückmeldesignal empfängt, das dem Abschaltsignal entspricht, wobei das TCMS entsprechend dem Abschaltsignal das Fernabschaltrückmeldesignal erzeugt.

15. System nach Anspruch 12 oder 13, ferner mit:
einer Druckschaltervorrichtung, die so eingerichtet ist, dass sie den Luftversorgungsdruck des Drehgestells erfasst,
wobei das TCMS ferner so eingerichtet ist, dass es entsprechend dem Luftversorgungsdruck des Drehgestells feststellt, ob die Drehgestellbremse erfolgreich abgeschaltet ist.

## Revendications

1. Procédé de coupure d'un frein de bogie, comprenant :
la réception d'un signal de coupure émis par un centre de commande opérationnel, OCC (Operating Control Center), lorsqu'un frein de bogie ne peut pas être desserré, le signal de coupure étant utilisé pour déclencher une action de coupure de frein de bogie ;
la réalisation d'une opération logique sur le signal de coupure afin d'obtenir un signal de commande de séparation ; et
la commande, conformément au signal de commande de séparation, d'une vanne électromagnétique correspondant à un bogie à agir de manière à couper le frein de bogie ;
le procédé de coupure du frein de bogie étant **caractérisé en ce que** la réalisation de l'opération logique sur le signal de coupure afin d'obtenir un signal de commande de séparation comprend : l'analyse syntaxique du signal de coupure reçu afin d'obtenir des données de défaut, les données de défaut comprenant une étiquette d'un bogie défectueux et un type de défaut du bogie défectueux ; la détermination de l'étiquette du bogie défectueux et la génération du signal de commande de séparation lorsqu'il est déterminé que le bogie défectueux ne peut pas être desserré pendant un freinage d'urgence.

2. Procédé selon la revendication 1, la commande, conformément au signal de commande de séparation, de la vanne électromagnétique correspondant au bogie de sorte qu'elle agisse, comprenant :
la commande, conformément au signal de commande de séparation, d'une sous-vanne électromagnétique dans la vanne électromagnétique de sorte qu'elle agisse, et la génération d'un signal de commande pneumatique de séparation correspondant ; et
la commande, conformément au signal de commande pneumatique de séparation, d'une vanne de commande pneumatique dans la vanne électromagnétique de sorte qu'elle agisse.

3. Procédé selon la revendication 1 ou 2, comprenant en outre pendant ou après la commande, conformément au signal de commande de séparation, de la vanne électromagnétique correspondant au bogie de sorte qu'elle agisse :
la génération, conformément au signal de coupure, d'un signal de retour de coupure à distance correspondant ; et
la sortie du signal de retour de coupure à distance vers une unité de commande de frein, BCU (Brake Control Unit), correspondant au bogie par l'intermédiaire d'un bus de véhicule multifonction, MVB (Multifunction Vehicle Bus).

4. Procédé selon la revendication 1 ou 2, comprenant en outre après la commande, conformément au signal de commande de séparation, de la vanne électromagnétique correspondant au bogie de sorte qu'elle agisse:
la détection de la pression d'alimentation en air du bogie par l'intermédiaire d'un dispositif d'interrupteur à pression ; et
la détermination, conformément à la pression d'alimentation en air du bogie, si le frein est coupé avec succès.

5. Procédé selon la revendication 4, la détermination, conformément à la pression d'alimentation en air du bogie, si le frein de bogie est coupé avec succès, comprenant :
la détermination que le frein de bogie est coupé avec succès lorsqu'il est détecté que la pression d'alimentation en air du bogie est inférieure ou égale à une valeur seuil prédéfinie ; et
la détermination que le frein de bogie n'est pas coupé avec succès lorsqu'il est détecté que la pression d'alimentation en air du bogie est supérieure à la valeur seuil prédéfinie.

6. Procédé selon la revendication 4, comprenant en outre après la détermination, conformément à la pression d'alimentation en air du bogie, si le frein de bogie est coupé avec succès :
la génération d'un message d'invitation pour demander à un utilisateur si le frein de bogie est coupé avec succès ; et
la sortie du message d'invention vers l'OCC.

7. Procédé selon la revendication 4, comprenant en outre après la détermination, conformément à la pression d'alimentation en air du bogie, si le frein de bogie est coupé avec succès :
la génération et l'affichage d'un message d'invitation pour demander à un utilisateur si le frein de bogie est coupé avec succès.

8. Dispositif de coupure d'un frein de bogie, comprenant :
un composant de réception qui est réalisé de manière à recevoir un signal de coupure émis par un centre de commande opérationnel, OCC (Operating Control Center), lorsqu'un frein de bogie ne peut pas être desserré, le signal de coupure étant utilisé pour déclencher une action de coupure de frein de bogie ;
un composant de traitement qui est réalisé de manière à exécuter une opération logique sur le signal de coupure afin d'obtenir un signal de commande de séparation ; et
un composant de commande qui est réalisé de manière à commander, conformément au signal de commande de séparation, une vanne électromagnétique correspondant à un bogie à agir de manière à couper le frein de bogie ;
le dispositif de coupure du frein de bogie étant **caractérisé en ce que** le composant de traitement est en outre réalisé de manière à réaliser une analyse syntaxique au niveau du signal de coupure reçu afin d'obtenir des données de défaut, les données de défaut comprenant une étiquette d'un bogie défectueux et un type de défaut du bogie défectueux ; à déterminer l'étiquette du bogie défectueux et à générer le signal de commande de séparation lorsqu'il est déterminé que le bogie défectueux ne peut pas être desserré pendant un freinage d'urgence.

9. Dispositif selon la revendication 8, le composant de commande comprenant :
un premier sous-composant de commande qui est réalisé de manière à commander, conformément au signal de commande de séparation, une sous-vanne électromagnétique dans la vanne électromagnétique de sorte qu'elle agisse, et à générer un signal de commande pneumatique de séparation correspondant ; et
un deuxième sous-composant de commande qui est réalisé de manière à commander, conformément au signal de commande pneumatique de séparation, une vanne de commande pneumatique dans la vanne électromagnétique de sorte qu'elle agisse.

10. Dispositif selon la revendication 8 ou 9, comprenant en outre :
un composant de génération qui est réalisé de manière générer, conformément au signal de coupure, un signal de retour de coupure à distance correspondant ; et
un composant de sortie qui est réalisé de manière à sortir le signal de retour de coupure à distance vers une unité de commande de frein, BCU (Brake Control Unit), correspondant au bogie par l'intermédiaire d'un bus de véhicule multifonction, MVB (Multifunction Vehicle Bus).

11. Dispositif selon la revendication 8 ou 9, comprenant en outre :
un composant de détection qui est réalisé de manière à détecter la pression d'alimentation en air du bogie par l'intermédiaire d'un dispositif d'interrupteur à pression ; et
un composant de détermination qui est réalisé de manière à déterminer, conformément à la pression d'alimentation en air du bogie, si le frein est coupé avec succès.

12. Système de coupure d'un frein de bogie, comprenant :
un centre de commande opérationnel, OCC (Operating Control Center), qui est réalisé de manière à émettre un signal de coupure lorsqu'un frein de bogie ne peut pas être desserré, le signal de coupure étant utilisé pour déclencher une action de coupure de frein de bogie ;
un système de commande et de gestion de train, TCMS (Train Control and Management System), qui communique avec l'OCC et qui est réalisé de manière à exécuter une opération logique sur le signal de coupure reçu afin d'obtenir un signal de commande de séparation ; et
une vanne électromagnétique qui est reliée au TCMS, à un bogie et à un réservoir d'air principal de véhicule, et qui est réalisée de manière à agir conformément au signal de commande de séparation de manière à couper le frein de bogie ;
le système de coupure du frein de bogie étant **caractérisé en ce que** le TCMS est en outre réalisé de manière à effectuer une analyse syntaxique au niveau du signal de coupure reçu afin d'obtenir des données de défaut, les données de défaut comprenant une étiquette d'un bogie défectueux et un type de défaut du bogie défectueux ; à déterminer l'étiquette du bogie défectueux et à générer le signal de commande de séparation lorsqu'il est déterminé que le bogie défectueux ne peut pas être desserré pendant un freinage d'urgence.

13. Système selon la revendication 12, la vanne électromagnétique comprenant :
une sous-vanne électromagnétique qui est reliée au TCMS et au réservoir d'air principal de véhicule et qui est réalisée de manière à agir conformément au signal de commande de séparation et à générer un signal de commande pneumatique de séparation correspondant ; et
une vanne de commande pneumatique qui est reliée à la sous-vanne électromagnétique, au bogie et au réservoir d'air principal de véhicule et qui est réalisée de manière à agir conformément au signal de commande pneumatique de séparation.

14. Système selon la revendication 12 ou 13, comprenant en outre :
une unité de commande de frein, BCU (Brake Control Unit), qui est reliée à la vanne électromagnétique, au TECMS et au bogie et qui est réalisée de manière à recevoir un signal de retour de coupure à distance correspondant au signal de coupure, le TCMS générant le signal de retour de coupure à distance conformément au signal de coupure.

15. Système selon la revendication 12 ou 13, comprenant en outre :
un dispositif d'interrupteur à pression qui est réalisé de manière à détecter une pression d'alimentation en air du bogie ;
le TCMS étant en outre réalisé de manière à déterminer si le frein de bogie est coupé avec succès en fonction de la pression d'alimentation en air du bogie.
